# EUROPEAN PATENT APPLICATION

(11) **EP 1 859 690 A1**
(43) Date of publication of application: **28.11.2007**
(21) Application number: 07106080.0
(22) Date of filing: 12.04.2007
(51) Int. Cl.: A23L 1/30, A23D 7/00, A23D 9/00, A23L 1/302, A23L 1/303

(54) **Premix for cholesterol lowering food products**

(30) Priority: 26.05.2006 EP 06076119
(71) Applicant: Health Concern B.V., 3542 AD Utrecht (NL)
(72) Inventor: Gutjahr Robert Michael, 3971 RA Driebergen (NL)
(74) Representative: van Loon, C.J.J.

(57) **Abstract**

The invention is directed to fat based food products, which food products have a cholesterol lowering effect when the food product is used. More in particular, the present invention provides food products comprising sterol compounds.

The present invention provides a fat based food product comprising less than 3% sterol compounds having a degree of esterification in the range of 40% - 100%, and at least 15% of an additive formulation comprising natural cholesterol lowering components, the remainder being conventional food product constituents.

## Description

The invention is directed to a premix that can be used in the preparation of food products, which food products have a cholesterol lowering effect when the food product is used, as well as to these food products *per se.* The premix of the present invention can be used in a large variety of food products, for instance in combination with other compounds having a cholesterol lowering effect, such as food products comprising sterol compounds. The term "sterol compounds" as used herein refers to sterols or stanols as such, or to sterol or stanol equivalents. The term "sterol or stanol equivalents" includes phytosterols or phytostanols, chemical modifications thereof, in particular with fatty acid esters thereof, and mixtures thereof. Hence, the term sterol compounds as used herein may for instance refer to 4-desmethylsterols, 4-monomethylsterols and 4.4'-dimethylsterols, their stanol equivalents, and all mixtures thereof.

The beneficial effects to health of the addition of sterol compounds to food products are known. In summary, sterol compound intake may help keeping the total cholesterol level low (preferably below 6.5 mmol/dm³), the low density lipoprotein (LDL) level low as well (0-4.5 mmol/dm³), and the high density lipoprotein (HDL) levels high (0.9-1.7 mmol/dm³). Furthermore the triglyceride level must be kept low (below 2.2 mmol/dm³).

WO-A-92/19640 describes beta-sitostanol fatty acid esters that can be used as such or added to food.

US-A-3 751 569 suggests the use of esters of monocarboxylic acid and plant sterols in dietary oils for reducing the cholesterol level.

WO-A-96/38047 describes the addition of specific levels of phytosterols to fat based food products, the phytosterols being defined as to include phytosterols fatty acid esters.

One of the objectives of the present invention is to provide a premix that can be added directly to any known food product to induce or improve a cholesterol lowering effect. The premix of the present invention can be prepared, stored and shipped separately from the food product and added thereto at a convenient point in time at a convenient facility.

The premix of the present invention comprises at least one of the following natural cholesterol lowering ingredients: polyphenol, vitamin A, vitamin B, vitamin B3, vitamin B6, vitamin B9, vitamin B12, vitamin C, vitamin D, vitamin E, fiber, inuline, pectine (in particular apple pectine), sesame, wheat, corn, yoghurt, artichoke, choline, inositol, L carnitine, isoflavone, lecithin, taurine, polyunsaturated fatty acids (PUFA) rich triglycerides, alpha linoleic acid, shellac wax (E 904), or antioxidant. Preferably it comprises 10, 11, 12, 13 or 14 or more of these natural cholesterol lowering ingredients. In one embodiment it contains all of these listed natural cholesterol lowering ingredients. Most preferably the premix contains at least shellac wax.

The premix of the present invention can be used in a variety of food products, including but not limited to: margarine or spreads; yoghurt based food products, such as yoghurt drinks; other types of dairy drinks, such as whey based drinks; cheese and cheese products, such as processed cheese; fruit based drinks; baked products, such as bread and snack-food.

It was furthermore found that the stability of certain fat based food products, in particular spreads, such as margarine, diminishes by the addition of sterol compounds thereto, in particular when the sterol compounds are used at higher levels. As sterol compounds are not very soluble in fat, large crystals of the sterol compounds may form in the products prepared with these sterol compounds. For example, very serious crystal formation may already be observed at 3-4% sterol compound levels. This is unacceptable for many consumers.

When trying to avoid this crystal formation, the sterol compound level may be kept below 3%. However, the cholesterol lowering power of the product decreases correspondingly. Since the daily intake by consumers of the targeted food products, such as margarine, is limited such levels would be expected to be too low to result in a positive effect on the cholesterol levels.

It is another objective of the present invention to provide a cholesterol lowering food product, in particular a food product enriched with sterol compounds, which is relatively low in said sterol compounds, in particular lower than 3% (all percentages as used herein refer to weight percentages of the total composition, unless indicated otherwise).

By esterification with fatty acids, the solubility of sterols/stanols can be increased. However, a disadvantage of this esterification is that it decreases the efficacy of the sterol/stanol compounds to lower the blood cholesterol level. Another disadvantage found in the use of sterol/stanol fatty acid esters is that the absorption of lipophilic micronutritients (like beta-carotene) is decreased (H.K. Gylling et al., Circulation 94 (supplement 1) (1996) 1-578).

Another disadvantage of using fatty acid-esterified sterol/stanols is found in the production thereof, requiring long processing times and/or high processing costs.

It was found that the lower cholesterol decreasing effect that results from the relatively low levels of said sterol compounds can be compensated by an additive formulation comprising natural cholesterol lowering components. This additive formulation, which is preferably in the form of the premix of the invention, is defined further hereinbelow. The additive formulation comprising natural cholesterol lowering components was found to have a synergistic effect with the sterol compound with respect to the above-mentioned total cholesterol, LDL and HDL levels. It was furthermore found that optimal results are obtained if the sterol compound is a fatty acid ester of sterol or stanol, wherein the degree of esterification is in the range of 40% - 100% (esterification degrees are expressed herein on a mol/mol basis). The additive formulation comprising natural cholesterol lowering components should be present in an amount of at least 15%. The remainder of the constituents are conventional ingredients, such as water and fats and optional flavourings, colorants and the like. It was furthermore found that a combination of the above-mentioned features solve, at least in part, the problems mentioned hereinabove.

Thus, in one aspect, the present invention is directed to a food product, such as a fat based food product comprising at least 15% of the additive formulation comprising natural cholesterol lowering components (premix) and 0-3% sterol compounds having a degree of esterification in the range of 40% - 100%, the remainder being conventional food product constituents. Because of the cholesterol-lowering efficacy of the premix, the presence of sterol compounds in the food product is optional.

The products of the invention may comprise sterol compounds, wherein the degree of esterification is in the range of 40-100%. Preferably, the degree of esterification is in the range of 50-94%, more preferably in the range of 55-80%, and most preferably in the range of 60-70%. It has been observed that such products do not show instability and/or crystal formation, whereas both the esterification of the sterols combined with the effect of the additive formulation results in a maximum blood cholesterol lowering efficacy. This is obtained and negative effects on absorption of lipophilic micro-nutritients are avoided. Accordingly, a significant cost reduction can be achieved, as the amount of the relatively expensive sterol compounds can be reduced, without a decrease of blood cholesterol lowering efficacy. A further reduction of costs is obtained in the time and processing reduction of the esterification process of the sterols. Hence, advantages are found in optimization of effect, quality (solubility) and production costs. The invention is very beneficial at total sterol levels of up to 3% sterol compounds.

Normally, a sterol compound level in the range of 7-15% is required to provide results that can be qualified as "sufficient" to "good" when applied in daily consumed food products. The food products of the present invention do not form organogels.

The additive natural cholesterol lowering components formulation, which may be added in the form of the premix according to the present invention, may be prepared as a single batch or as multiple batches. The batch or batches are to be added to the final formulation of the food product, which further comprises conventional ingredients such as water and fats.

The additive formulation (premix) comprises one or more of the following ingredients: polyphenols, vitamins (A, B, B3, B6, B9, B12, C, D or E), fibers, inuline, pectines (e.g. apple pectine), sesame (e.g. sesame paste), wheat, corn, yoghurt, artichoke (e.g. artichoke powder), choline, inositol, L carnitine, isoflavones (e.g. soy), lecithin (e.g. soy or sunflower), taurine, polyunsaturated fatty acids (PUFA) rich triglycerides (in particular sunflower oil or high oleic sunflower oil, which may be obtained from sunflower kernels), alpha linoleic acid, shellac wax (E 904), and antioxidant (e.g. lemon or oregano).

Sterols are the preferred sterol compounds in products of the present invention, which sterols are more preferably at least partly esterified. The optimum esterification level depends on the fat level in the food product and the total level of sterols therein. For a given total sterol amount in the product, the optimal degree of esterification will be lower for high fat levels than for low fat levels.

For example, at fat levels in the range of 50-90%, the degree of esterification is suitably optimized in the range of 40-75%, whereas at a fat level in the range of 0-50%, the degree of esterification optimum will generally be found in the range of 60-90%. Also, higher sterol compound levels at a given fat level give better results at higher degrees of esterification.

In one advantageous embodiment of the present invention, the optimal amount of additive formulation is 16-30%, more preferably about 20-28%, most preferably 21-24%. Furthermore, the sterol compound level is typically 0-2.99%, preferably 1-2.95%, more preferably 2.4-2.95%, most preferably 2.8-2.9%.

The premix of the present invention can be used in conventional food products, which can be fat-based or non-fat-based. Fat-based food products are food products that are (partially) based on fat and regarded by the consumer, as "fatty type of products". Examples are yellow fat spreads (containing vegetable fat and/or animal fat such as butterfat), in particular margarine, dressings, coffee creamer, shortenings, cooking and frying oils, fillings and toppings, ice cream and the like. These products in most cases comprise a particular amount of fat. In some cases, however, products are still regarded as "fatty types of products", despite a replacement of part or even all the fat by fat substitute. Fat based food products in which the fat is partially or completely replaced by fat substitutes are also covered by the term fat based food products of this invention.

The food products as such are common products in the western world, and are used by consumers on a daily basis in amounts different for each individual. The invention is in particular very suitable for yellow fat spreads, in particular margarine, dressings, cheese, shortenings, cooking and frying oils and ice cream, with a preference for yellow fat spreads, mayonnaise, dressings, shortenings, cooking and frying oils. On the basis of habits of consumers in the western world, the invention is preferred to concern particular for yellow fat spreads (including margarines, butter and low fat spreads) and dressings. Yellow fat spreads, for this invention, typically comprise 0-90% fat (usually 5-80%). Dressings typically comprise 0-85% fat (usually 5-80%), shortening, cooking and frying oil typically more than 95% fat.

The preparation of the products of the invention can be carried out in any suitable manner commonly known. Suitably, the sterol compound or mixture of sterol compounds, when used, can be added and dissolved to the fat prior to combining with the aqueous phase of the product to be prepared. The natural cholesterol lowering additive formulation, preferably in the form of the premix, may be partly soluble in water and partly in the fatty phase, so parts of it can be used in an aqueous phase and parts of it can be used in a fatty phase.

The optimal degree of esterification of the sterols may also vary with the manner of preparation of the food product. The optimal efficacy of the mix may also vary with the manner of preparation of the food product.

The fat that is applied in these fat based food products can be any fat, such as dairy fat and/or vegetable fat. However, if fat is present, for health reasons the use of one or more vegetable fat sources is preferred. In particular, the use of liquid fats is preferred. Most preferred is that at least part of the fats used in the total composition are the PUFA rich triglycerides of the additive composition. The fat can be one single fat or a blend. The use of fat compositions comprising a considerable amount of polyunsaturated fatty acids rich triglycerides in addition to the use of the sterol compounds is in particular considered highly beneficial. For example, oils of sunflower, safflower, rapeseed, linseed, linola and/or soybean are preferred. Also the fat compositions mentioned in NL-A-0 143 115, NL-A-0 178 559, NL-A-0 155 436, NL-A-0 149 687, NL-A-0 155 177, EP-A-0 041 303, EP-A-0 209 176, EP-A-0 249 282 and EP-A-0 470 658 are highly suitable. Suitable fats are selected from the group of: fish oil, sunflower oil, thistle oil, palm kernel oil, oil acid, borage oil, primrose (*oenothera biennis)* oil, black berry seed oil, bernagie seed oil, macadamia oil, linseed oil, rapeseed oil, walnut oil, corn oil, wheat oil, canola oil, palm oil, CLA (conjugated linoleic acid), soy oil, soy isoflavones, soy lecithin and combinations (in particular blends) thereof. Insofar these fats are PUFA rich triglycerides they form part of the additive formulation comprising natural cholesterol lowering components as defined herein.

If a fat blend is used, it is preferred that it comprises less than 29.5%, and more preferred less than 23% of polyunsaturated fatty acids, based on the total weight amount of the fat in the fat based food product. A strong effect on the cholesterol lowering effect is obtained if the fat blend comprises less than 29% of PUFA rich triglycerides. The composition and amount of the additive formulation can be adjusted to obtain this amount of PUFA rich triglycerides in the final composition.

Where the butterfat is used for preparing spreads of the invention, or where the spreads are butter, it is preferred that the amounts of sterol equivalents is about 2.0-2.9%, combined with about 20-30% additive formulation. As the consumption of butter is considered less beneficial for consumers health, the present invention is in particular suitable for making spreads containing butter or butter mélanges, as the negative effect associated with the butter consumption can be minimized or even reversed. It is also possible to prepare cholesterol-lowering spreads in accordance with the present invention which do not contain sterol compounds, by using the premix alone.

For obtaining the optimal amount of sterol-esters, preferably the sterols are esterified with one or more C2-22 fatty acids. For the purpose of the invention the term C2-22 fatty acid refers to any molecule comprising a C2-22 main chain and at least one acid group. Although not preferred within the present context the C2-22 main chain may be partially substituted or side chains may be present. Preferably, however the C2-22 fatty acids are linear molecules comprising one or two acid group(s) as end group(s). Most preferred are linear C8-22 fatty acids as occur in natural oils.

Suitable examples of any such fatty acids are acetic acid, propionic acid, butyric acid, caproic acid, caprylic acid, capric acid. Other suitable acids are for example citric acid, lactic acid, oxalid acid, and maleic acid. Most preferred are lauric acid, palmitic acid, stearic acid, arachidic acid, behenic acid, oleic acid, cetoleic acid, erucic acid, elaidic acid, linoleic acid and linolenic acid.

A mixture of fatty acids may also be used for esterification of the sterols. For example, it is possible to use a naturally occurring fat or oil as a source of the fatty acid and to carry out the esterification via an interesterification reaction.

In a particular embodiment, the fatty acid mixture contains a limited amount (<29.5%, preferably <25%, more preferred <21%) of PUFA. Although present in a limited amount, the PUFA still provides good blood cholesterol lowering capacity. Also of the sterol esters prepared with such fatty acids have higher solubility and blood cholesterol lowering efficacy on the body.

Preferably fatty acid mixtures of sunflower, safflower, rapeseed, linseed, linola and/or soybean are used. These are typical sources of high PUFA and/or low saturated fatty acids (SAFA). Suitable esterification conditions are for example described in WO-A-92/19640.

Another advantage of the present invention is that by addition of free sterols and fatty acid ester sterols in combination with the additive formulation, the amount of hardstock required to make a spreadable product from the abovementioned liquid oils can be reduced, thereby optimizing the amount of PUFA rich glycerides in the product.

A highly preferred ingredient of the additive formulation is choline (trimethyl ethanolamine). It was found that in combination with the other ingredients of the products of the present invention choline is particularly suitable for reducing total cholesterol and LDL cholesterol levels, as well as lipids level. Choline is applied in amounts of preferably 0.005-0.5%, more preferably 0.015-0.17%, typically about 0.05%.

Another highly preferred ingredient of the additive formulation is shellac wax (E 904). This compound is usually applied in foodstuffs as an agent to provide gloss thereto. In combination with the other ingredients of the products of the present invention, it was found to have a very good effect on total cholesterol level, LDL level as well as HDL levels. The shellac is applied in amounts of preferably 0.03-15%, more preferably 0.1-3.20%, even more preferably 0.1-1%, e.g. about 0.3%. In another aspect, the present invention is directed to the use of shellac wax in the preparation of a cholesterol-lowering food product. Thus cholesterol-lowering food products of the types mentioned herein comprising shellac wax are within the scope of the present invention. Instead of shellac wax (E 904) any other type of food-grade lac or lac-based products can be used in accordance with the present invention, such as bleached lac, dewaxed bleached lac, dewaxed/decolourised shellac, shellac wax, *etc.*

The premix of the present invention comprises the other ingredients of the additive formulation mentioned above, in the following amounts, which are suitable for most food products described hereinabove. The amounts given are based on the total weight of final food product. Thus the exact composition of the premix can be derived from these figures and depends on the amount of premix used. They apply in particular for a spread, more in particular to a margarine, but their use is not limited thereto.

Saturated oil, such as palm oil and rapeseed oil, may be applied in the final product in amounts of typically 0-95%, preferably about 1.6-90%, more preferably of about 5-55%.

Sunflower oil may be applied in the final product in amounts of typically 0-95%, preferably about 0.3-90%, more preferably of about 1-12%.

High Oleic Sunflower oil may be applied in the final product in amounts of typically 0-95%, preferably about 1-90%, more preferably of about 3-45%.

E 471 may be applied in the final product in amounts of typically 0-5%, preferably about 0.03-3%, more preferably of about 0.05-1%.

E 322 may be applied in the final product in amounts of typically 0-5%, preferably about 0.03-3%, more preferably of about 0.09-1%.

E 476 (backbone emulgator) may be applied in the final product in amounts of typically 0-5%, preferably about 0.03-3%, more preferably of about 0.09-1%.

E 160 a may be applied in the final product in amounts of typically 0-5%, preferably about 0-0.25%, more preferably of about 0.01-0.08%.

Vitamin A + D3 may be applied in the final product in amounts of typically 0-0.1%, preferably about 0-0.07%, more preferably of about 0-0.02%.

Butter flavoring may be applied in the final product in amounts of typically 0-1%, preferably about 0.006-0.6, more preferably of about 0.015-0.2.

Vitamin E may be applied in the final product in amounts of typically 0-3%, preferably about 0.02-2%, more preferably of about 0.06-0.7%.

Primrose oil may be applied in the final product in amounts of typically 0-2%, preferably about 0.01-1%, more preferably of about 0.03-0.4%

Safflower oil may be applied in the final product in amounts of typically 0-8%, preferably about 0.06-6%, more preferably of about 0.2-2%.

Vitamin C may be applied in the final product in amounts of typically 0-2%, preferably about 0.01-1.4%, more preferably of about 0.04-0.45%.

Alpha linoleic acid may be applied in the final product in amounts of typically 0-15%, preferably about 0.1-11%, more preferably of about 0.3-4%.

EPA DPA Enc fish oil may be applied in the final product in amounts of typically 0-10%, preferably about 0.05-6%, more preferably of about 0.15-2%.

E 904 may be applied in the final product in amounts of typically 0-5%, preferably about 0.03-4%, more preferably of about 0.1-1.5%.

Inulin may be applied in the final product in amounts of typically 0-25%, preferably about 0.2-20%, more preferably of about 0.6-7%.

Pectins, in particular apple pectin, may be applied in the final product in amounts of typically 0-8%, preferably about 0.05-5%, more preferably of about 0.15-1.7%. Other fibers than pectin may be used in addition to or instead of (not preferred) pectins, in particular natural water soluble fibers, such as psyllium, guar and/or oat, which can be applied in the same amounts.

Antioxidant may be applied in the final product in amounts of typically 0-2%, preferably about 0.01-1%, more preferably of about 0.03-0.35%.

Polyphenol may be applied in the final product in amounts of less than 0.1%, but this is not preferred because of the possible discolorations of the product.

E 262 may be applied in the final product in amounts of typically 0-1%, preferably about 0.01-0.5%, more preferably of about 0.02-0.2%.

Citric acid may be applied in the final product in amounts of typically 0-1%, preferably about 0.01-0.5%, more preferably of about 0.02-0.17%.

Vitamin B mix may be applied in the final product in amounts of typically 0-1%, preferably about 0.01-0.5%, more preferably of about 0.02-0.17%.

Choline may be applied in the final product in amounts of typically 0-1%, preferably about 0.01-0.5%, more preferably of about 0.02-0.17%.

The product of the present invention may further contain water in amounts of preferably about 5.67-90%, more preferably of about 17-89%,.

Starch may be applied in the final product in amounts of typically 0-10%, preferably about 0.05-5, more preferably of about 0.15-1.7%.

In certain cases higher amounts than the typical and preferred amounts listed above can be used as well.

### Example 1. Human trial, intake 3.31 g/d sterols, 65% esterified

The following study was conducted previously and has been described elsewhere. The study was conducted with 100 volunteers, between 18 and 65 years of age, with stable body weights and body mass indices and normal dietary patterns. Subjects received during 25 days (3.5 weeks) 30 g/day of a margarine for consumption at lunch and dinner. Fasting blood was sampled after 3.5 weeks. A short run-in period of 5 days in which the volunteers familiarized themselves with the procedures preceded the actual trial.

The trial margarines were fortified with sterols derived from soybean oil distillates. These sterols were esterified with fatty acids from sunflower seed oil with an esterification rate of 65%. The sterol-ester concentrates were used in spread production together with other edible oils and fats in order to achieve a product with similar fatty acid composition as the non-fortified control (PUFA/MUFA/SAFA = 48/29/23%). Final sterol equivalent concentration (as free and esterified sterol) was 11.0% on the product. Margarines were kept at 5 °C before delivery to the volunteers and were intended to replace an equivalent amount of the spread habitually used by the volunteers.

Venous blood was obtained from seated volunteers that were at least 10 hours in a fasting state. Plasma was prepapred by centrifuging blood for 10 minutes at 3000 g. Plasma total cholesterol concentrations were determined directly. HDL- and LDL cholesterol levels at screening were determined at a later stage in plasma. LDL-cholesterol was calculated.

Plasma obtained during the trial was stored at -80 °C for cholesterol analyses.

Analyses showed a decrease in total cholesterol concentration of 7.4% (from 5.15 mM in control group to 4.77 mM in sterol group) and a decrease of 11.8% in LDL-cholesterol concentration (from 3.31 mM to 2.92 mM). HDL-cholesterol concentration was not significantly affected by the test margarine. In conclusion, an intake of 3.31 g of sterols per day of which 65% was esterified with fatty acids lead to a decrease in total cholesterol concentration of 7.4% and a decrease in LDL-cholesterol concentration of 11.8%. The HDL/LDL cholesterol ratio was positively affected by an increase of 14.3%.

When decreasing the amount of sterol compounds to 2.9%, the cholesterol lowering power of the margarines decreased. When the additive formulation comprising natural cholesterol lowering components is added in an amount of 22%, in accordance with the present invention, the cholesterol lowering power increases significantly. When the natural cholesterol lowering components were added in amount of 15% also a significant increase in the cholesterol lowering power was observed.

Sterol compounds affect the LDL-cholesterol level positively, but do not affect the HDL-cholesterol level. When adding the additive formulation in accordance with the present invention, also the HDL-cholesterol level is influenced positively.

### Example 2. Human trial, intake 3.30 g/day sterols, 85% esterified

Example 1 was repeated, with the following modifications. Sterols that were esterified with fatty acids from sunflower seed oil with an esterification rate of 85% were used. Final sterol equivalent concentration (as free and esterified sterol) was 13.2% on the product.

Analyses showed a decrease in total cholesterol concentration of 6.3% (from 5.25 mM in control group to 4.92 mM in sterol group) and a decrease of 9.0% in LDL-cholesterol concentration (from 3.10 mM to 2.82 mM). HDL-cholesterol concentration was not significantly affected by the test margarine. In conclusion, an intake of 3.30 g of sterols per day of which 85% was esterified lead to a decrease in total cholesterol concentration of 6.3% and a decrease in LDL-cholesterol concentration of 9.0%. The HDL/LDL cholesterol ratio was positively affected by an increase of 7.9%.

When decreasing the amount of sterol compounds to 2.9%, the cholesterol lowering power of the margarines decreased. When the additive formulation comprising natural cholesterol lowering components is added in an amount of 22%, in accordance with the present invention, the cholesterol lowering power increases significantly.

### Example 3. Human trial, intake 0.85 g/day sterols, 0% esterified

Example 1 was repeated, with the following modifications. The trial margarines were fortified with sterols derived from soybean oil distillates. These sterols were added as free sterols to the margarine. The sterol concentrates were used in spread production together with other edible oils and fats in order to achieve a product with similar fatty acid composition as the non-fortified control (PUFA/MUFA/SAFA = 48/29/23%). Final sterol equivalent concentration (as free sterol) was 3.4% on the product.

Analyses showed a decrease in total cholesterol concentration of 3.8% (from 5.06 mM in control group to 4.87 mM in sterol group) and a decrease of 6.1% in LDL-cholesterol concentration (from 3.10 mM to 2.91 mM). HDL-cholesterol concentration was not significantly affected by the test margarine. In conclusion, an intake of 0.85 g of un-esterified sterols per day lead to a decrease in total cholesterol concentration of 3.8% and a decrease in LDL-cholesterol concentration of 6.1%. The HDL/LDL cholesterol ratio was positively affected by an increase of 8.2%.

When decreasing the amount of sterol compounds to 2.9%, the cholesterol lowering power of the margarines decreased. When the additive formulation comprising natural cholesterol lowering components is added in an amount of 22%, in accordance with the present invention, the cholesterol lowering power increases significantly.

### Example 4. Human trial, intake 0.85 g/day sterols, 85% esterified

Example 1 was repeated, with the following modifications. The trial margarines were fortified with sterols derived from soybean oil distillates. These sterols were esterified with fatty acids from sunflower seed oil with an esterification rate of 85%. The sterol-ester concentrates were used in spread production together with other edible oils and fats in order to achieve a product with similar fatty acid composition as the non-fortified control (PUFA/MUFA/SAFA = 48/29/23%). Final sterol equivalent concentration (as free and esterified sterol) was 3.4% on the product.

Analyses showed a decrease in total cholesterol concentration of 2.9% (from 5.25 mM in control group to 5.10 mM in sterol group) and a decrease of 2.3% in LDL-cholesterol concentration (from 3.10 mM to 3.03 mM). HDL-cholesterol concentration was not significantly affected by the test margarine. In conclusion, an intake of 0.85 g of sterols per day of which 85% was esterified lead to a decrease in total cholesterol concentration of 2.9% and a decrease in LDL-cholesterol concentration of 2.3%. The HDL/LDL cholesterol ratio was positively affected by an increase of 2.9%.

When decreasing the amount of sterol compounds to 2.9%, the cholesterol lowering power of the margarines decreased. When the additive formulation comprising natural cholesterol lowering components is added in an amount of 22%, in accordance with the present invention, the cholesterol lowering power increases significantly.

## Claims

1. Premix for use in cholesterol-lowering food products, comprising at least one natural cholesterol lowering ingredient selected from the group of: polyphenol, vitamin A, vitamin B, vitamin B3, vitamin B6, vitamin B9, vitamin B12, vitamin C, vitamin D, vitamin E, fiber, inuline, pectine (in particular apple pectine), sesame, wheat, corn, yoghurt, artichoke, choline, inositol, L carnitine, isoflavone, lecithin, taurine, polyunsaturated fatty acids (PUFA) rich triglycerides, alpha linoleic acid, shellac wax (E 904), and antioxidant.

2. Fat based food product comprising less than 3% sterol compounds (by weight, based on the total product composition) having a degree of esterification in the range of 40%-100% (mol/mol), and at least 15% (by weight, based on the total product composition) of an additive formulation comprising natural cholesterol lowering components, preferably in the form of the premix of claim 1, the remainder being conventional food product constituents.

3. Premix or fat based food product according to any of the previous claims, which comprises choline, preferably in an amount of 0.005-0.5%, more preferably 0.015-0.17%, based on the total weight of the food product.

4. Premix or fat based food product according to any of the previous claims, which comprises shellac wax, preferably in an amount of 0.03-3.20%, more preferably 0.1-1%, based on the total weight of the food product.

5. Premix or fat based food product according to any of the previous claims, wherein said additive formulation comprises the following natural cholesterol lowering ingredients: polyphenol, at least one vitamin selected from the group consisting of vitamin A, B, B3, B6, B9, B12, C, D and E, choline, PUFA rich triglycerides, shellac wax (E 904), and antioxidant, based on the total weight of the food product.

6. Premix or fat based food product according to claim 5, further comprising at least one of and preferably all of: fiber, inuline, pectine (in particular apple pectine), sesame paste, wheat, corn, yoghurt, artichoke powder, inositol, L carnitine, soy isoflavones, soy lecithin, taurine, sunflower lecithine, alpha linoleic acid, and antioxidant.

7. Fat based food product according to any of the previous claims 2-6, wherein said additive formulation is present in an amount of 15-30%, more preferably about 22-28%, most preferably 22-24%, based on the total weight of the food product.

8. Fat based food product according to any of the claims 2-7, wherein the degree of esterification of the sterol compounds is in the range of 50% - 80%, preferably in the range of 55-75%, more preferably 60%-70%

9. Fat based food product according to any of the claims 2-8, wherein the total amount of sterol compounds is at least 2%.

10. Fat based food product according to any of the claims 2-9, wherein the fat used in the product is a fat comprising less than 29.5% (by weight, based on the total product composition), and preferably less than 22% of PUFA rich triglycerides.

11. Fat based food product according to any of the claims 2-10, selected from the group of yellow fat spreads (in particular margarine), mayonnaise, dressings, shortenings, cooking and frying oils and ice cream.

12. Cholesterol-lowering food product comprising shellac wax as the cholesterol-lowering ingredient.
